(19) Europäisches Patentamt / European Patent Office / Office européen des brevets

(11) **EP 1 923 428 B1**

(12) **EUROPEAN PATENT SPECIFICATION**

(45) Date of publication and mention
of the grant of the patent:
**09.11.2011 Bulletin 2011/45**

(21) Application number: **06797527.6**

(22) Date of filing: **06.09.2006**

(51) Int Cl.:
***C08L 67/00*** (2006.01)

(86) International application number:
**PCT/JP2006/317632**

(87) International publication number:
**WO 2007/029728 (15.03.2007 Gazette 2007/11)**

(54) **POLYESTER RESIN AQUEOUS DISPERSION, COATING FILM OBTAINED FROM SAME, AND PACKAGING BAG USING SUCH COATING FILM**

WÄSSRIGE POLYESTERHARZDISPERSION, DARAUS ERHALTENER FILM UND VERPACKUNGSBEUTEL MIT EINEM DERARTIGEN FILM

DISPERSION AQUEUSE DE RÉSINE DE POLYESTER, FILM DE REVÊTEMENT OBTENU À PARTIR DE CELLE-CI ET SAC D'EMBALLAGE UTILISANT LEDIT FILM DE REVÊTEMENT

(84) Designated Contracting States:
**DE FR GB IT**

(30) Priority: **06.09.2005 JP 2005257786**

(43) Date of publication of application:
**21.05.2008 Bulletin 2008/21**

(73) Proprietor: **UNITIKA LTD.**
**Amagasaki-shi,**
**Hyogo 660-0824 (JP)**

(72) Inventor: **TAKESUE, Mamiko**
**Osaka 5400022 (JP)**

(74) Representative: **HOFFMANN EITLE**
**Patent- und Rechtsanwälte**
**Arabellastraße 4**
**81925 München (DE)**

(56) References cited:
**EP-A- 1 457 525      WO-A1-2004/037924**
**JP-A- 06 192 547      JP-A- 09 296 100**
**JP-A- 57 089 955      JP-A- 60 206 859**
**JP-A- 2000 026 709      JP-A- 2000 313 793**
**JP-A- 2002 173 582**

EP 1 923 428 B1

**Description**

Technical Field

The present invention relates to a polyester resin aqueous dispersion containing two kinds of polyester resins at a particular rate, a film obtained therefrom, and a packaging bag using the film.

Background Art

Polyester resins, which are superior as film-forming resins in film processability, resistance to organic solvents (solvent resistance), weather resistance, adhesiveness to various base materials and the like, have been consumed as a binder component in a greater quantity in the fields of paint, ink, adhesive, coating agent and the like.

In particular, in the trend toward restriction of the use of organic solvents from the points of environmental protection, energy conservation, regulations of hazardous substances for example by the Fire Defense Law, and working environment improvement; and for use as a polyester resin-based binder in such applications, development of polyester resin aqueous dispersions of fine polyester resin particles dispersed in an aqueous medium has been intensively carried out.

For example, polyester resin aqueous dispersions of a high-molecular weight polyester resin having a smaller acid value dispersed in an aqueous medium were disclosed in Patent Documents 1 to 4, and use of these aqueous dispersions was described to provide a film superior in performances including processability, water resistance, solvent resistance and the like. These literatures are so-called self-emulsified polyester resin aqueous dispersions wherein the resin particles are dispersed in an aqueous medium by neutralization of the carboxyl groups of polyester resin with a basic compound; and for stable dispersion of the polyester resin in the aqueous medium, the polyester resin used should have carboxyl groups in an amount equivalent to an acid value of 8 mg KOH/g or more. As a result, these dispersions carried the problems of restriction of the molecular weight of the polyester resin usable and occasional insufficient adhesiveness.

Patent Document 5 disclosed a polyester resin aqueous dispersion containing a polyester resin having lower acid value and high molecular weight disperse in an aqueous medium as a method of overcoming the problem in adhesiveness. The proposed dispersion indeed gave a film superior in adhesiveness, but cause new problems concerning low-temperature filming property, blocking resistance and low-temperature heat-sealing property. Specially, when a film is formed on the surface of a base material, it should be formed occasionally at low temperature, depending on the base material, and, when a polyester resin aqueous dispersion forming a film, for example at a low temperature of about 100˚C is used, the dispersion should contain inevitably a polyester resin having a lower glass transition temperature and thus gives a film less resistant to blocking. For example, when multiple sheets of a material carrying the film causes blocking, making separation thereof difficult, when are piled and left under a high-temperature atmosphere at around 38˚C. Thus, it was difficult to satisfy the requirements on low-temperature filming property and blocking resistance at the same time. When two sheets of a base material piled with their film-carrying faces in contact with each other and heat-sealed, it is necessary to heat seal at low temperature, depending on the base material used, but polyester resin aqueous dispersions giving a film having blocking resistance were lower in low-temperature filming property as well as low-temperature heat-sealing property as described above when used. A film lower in low-temperature heat-sealing property cannot be fused sufficiently at a low thermal-fusion temperature, for example, of around 130˚C and thus, the resulting film does not have desirable adhesive power.

A water-based resin composition was disclosed in EP-A-1 457 525 that can be used in paints, adhesives, impregnating agents and sealants. The resin composition comprises a polyester resin, a vinyl modified polyester resin and a curing agent.

Patent Document 1: Japanese Patent Application Laid-Open No. 9-296100
Patent Document 2: Japanese Patent Application Laid-Open No. 2000-26709
Patent Document 3: Japanese Patent Application Laid-Open No. 2000-313793
Patent Document 4: Japanese Patent Application Laid-Open No. 2002-173582
Patent Document 5: WO 2004/037924 Pamphlet

Disclosure of Invention

Technical Problems to be Solved

An object of the present invention, which was made under the circumstances above, is to provide a polyester resin aqueous dispersion giving a film superior in low-temperature filming property, blocking resistance and low-temperature heat-sealing property, a film obtained therefrom, and a packaging bag using the film.

Specifically, the object of the present invention is to provide a polyester resin aqueous dispersion giving a resin film without cracks when formed at low temperature, superior in adhesive properties to a base material and blocking resistance, and superior in bonding properties when heat-sealed at low temperature, a film obtained therefrom, and a packaging bag using the film.

In the present description, the term "adhesive properties" means the capability of a resin film formed on a base material to adhere and bind to the base material tightly.

The bonding properties mean that, when two base materials, at least one of which carries a resin film formed on the surface, are piled with the film-formed face in contact and heat-sealed, the resin film connects and binds the two base materials to each other tightly.

Means to Solve the Problems

After intensive studies to solve the problems above, the inventors have found that a film obtained from an aqueous dispersion containing two specific kinds of polyester resins at a particular rate was superior in low-temperature filming property, blocking resistance as well as low-temperature heat-sealing property, and completed the present invention.

The present invention relates to a polyester resin aqueous dispersion, comprising:

a polyester resin (A) having a number-average molecular weight of 5,000 or more, a glass transition temperature of 50 ˚C or higher and an acid value of 4 to 40 mg-KOH/g, and

a polyester resin (B) having a number-average molecular weight of 9,000 or more, a glass transition temperature of 30 ˚C or lower and an acid value of 2 to 10 mg-KOH/g at a rate (A)/(B) in the range of 80/20 to 20/80 (by mass), wherein the polyester resins (A) and (B) respectively are comprised of one or more polybasic acid components selected from the group consisting of terephthalic acid, isophthalic acid, phthalic acid, phthalic anhydride, naphthalenedicarboxylic acid, biphenyldicarboxylic acid, oxalic acid, succinic acid, succinic anhydride, adipic acid, azelaic acid, sebacic acid, dodecanedionic acid, hydrogenated dimer acid, fumaric acid, maleic acid, maleic anhydride, itaconic acid, itaconic anhydride, citraconic acid, citraconic anhydride, dimer acid, 1,4-cyclohexanedicarboxylic acid, 1,3-cyclohexanedicarboxylic acid, 1,2-cyclohexanedicarboxylic acid, 2,5-norbornene dicarboxylic acid, 2,5-norbornenedicarboxylic anhydride, tetrahydrophthalic acid, and tetrahydrophthalic anhydride, and

an alcohol component comprising ethylene glycol and neopentylglycol at a total content of 50 mol% or more, wherein the number-average molecular weight is determined by GPC analysis by using LC-10ADvp liquid-supplying unit and ultraviolet-visible spectrophotometer SPD-6AV manufactured by Shimadzu Corporation under conditions of detection wavelength: 254 nm, solvent: tetrahydrofuran, and polystyrene conversion,

wherein the glass transition temperature is determined by analyzing 10 mg of a polyester resin sample in a differential scanning calorimetry apparatus by using DSC7 manufactured by PerkinElmer Japan Co., Ltd. at a heating speed of 10 ˚C/minute, determining two inflection-point temperatures due to glass transition in the temperature rise curve obtained, and obtaining the intermediate value thereof, and

wherein the acid value is determined by dissolving 0.5 g of a polyester resin sample in 50 ml of water/dioxane = 1/9 (by volume), determining the amount of KOH consumed in neutralization by titration of the solution with KOH in the presence of an indicator cresol red, and converting the amount to a value per 1 g of the polyester resin, a film obtained by removing the aqueous medium therefrom, and a packaging bag obtained by thermal fusion of the film.

Effects of the Invention

The polyester resin aqueous dispersion according to the present invention, which gives a film superior in low-temperature filming property, blocking resistance and low-temperature heat-sealing property, is favorable as a binder component for heat-sealing materials, and the product carrying the film is favorable in the packaging bag application, and thus, both of them are very valuable industrially.

Best Mode for Carrying Out the Invention

The polyester resin aqueous dispersion according to the present invention is a liquid containing at least a polyester resin (A) and a polyester resin (B) at a particular rate in an aqueous medium.

In the present invention, the glass transition temperature (hereinafter, referred to as Tg) of the polyester resin (A) is 50˚C or higher, in particular 50˚C or higher and 80˚C or lower, more preferably 60˚C or higher and 75˚C or lower. The polyester resin (A) is a component effective mainly in improving blocking resistance of the film obtained from the polyester resin aqueous dispersion according to the present invention. A polyester resin (A) having a Tg of lower than 50˚C has lower blocking resistance.

The number-average molecular weight of the polyester resin (A), as determined by GPC (gel-permeation chromatography) analysis, is 5,000 or more, preferably 6,000 or more. A resin film having a number-average molecular weight of less than 5,000 is brittle and lower in low-temperature filming property (adhesive properties) and bonding properties. The number-average molecular weight is normally 20,000 or less, preferably 15,000 or less, from the viewpoint of low-temperature filming property.

The polyester resin (A) has an acid value of 4 to 40 mg-KOH/g, preferably 8 to 30 mg-KOH/g.

The Tg of the polyester resin (B) is 30˚C or lower, in particular -30˚C or higher and 30˚C or lower, more preferably -25˚C or higher and 25˚C or lower. The polyester resin (B) is a component effective mainly in improving the low-temperature filming property and the low-temperature heat-sealing property of the film obtained from the polyester resin aqueous dispersion according to the present invention, and a polyester resin (B) having a Tg of higher than 30˚C has lower low-temperature filming property or/and low-temperature heat-sealing property.

The number-average molecular weight of the polyester resin (B), as determined by GPC, is 9,000 or more, preferably 10,000 or more. A resin film having a number-average molecular weight of less than 9,000 has lower heat-sealing property (bonding properties). The number-average molecular weight is normally 30,000 or less, preferably 25,000 or less, from the viewpoint of the dispersion stability of aqueous dispersion normally.

The polyester resin (B) has an acid value of 2 to 10 mg-KOH/g, particularly preferably 4 to 8 mg-KOH/g.

The mass ratio of the polyester resin (A) to the polyester resin (B) in the polyester resin aqueous dispersion according to the present invention (A)/(B) is in the range of 80/20 to 20/80, preferably in the range of 75/25 to 25/75, and more preferably in the range of 70/30 to 30/70. A mass ratio of the polyester resin (A) of less than 20% leads to insufficient blocking resistance, while a mass ratio of more than 80% of the polyester resin (A) leads to deterioration in low-temperature filming property or/and low-temperature heat-sealing property.

Both of the polyester resins (A) and (B) can be prepared by a known method, for example, by polycondensation of one or more polybasic acid components with one or more polyhydroxy alcohol components, depolymerization with a polybasic acid component after polycondensation, and addition of an acid anhydride after polycondensation. It is possible to control the Tg, number-average molecular weight and acid value of the resin and consequently to produce the polyester resins (A) and (B) separately, by adjusting various conditions.

Examples of the polybasic acid components include aromatic dicarboxylic acids, aliphatic dicarboxylic acids and the like. Increase of the rate of the aliphatic dicarboxylic acid in the polybasic acid component leads to decrease of resin Tg. On the other hand, decrease of the aliphatic dicarboxylic acid rate leads to increase of resin Tg.
Examples of the polyhydroxy alcohol components include aliphatic glycols, alicyclic glycols, ether bond-containing glycols and the like. Increase of the rate of a long-chain ether bond-containing glycol in the polyhydroxy alcohol component leads to decrease of resin Tg. On the other hand, decrease of the rate of the long-chain ether bond-containing glycol leads to increase in resin Tg.

For example, use of a greater amount of a polybasic acid component for depolymerization leads to decrease in resin number-average molecular weight and increase of acid value. On the other hand, decrease in the polybasic acid component quantity leads to increase of resin number-average molecular weight and decrease of acid value. Use of a trifunctional or higher acid as the polybasic acid component leads to increase of acid value more distinctive compared to use of a bifunctional acid.

Polybasic acid components, polyhydroxy alcohol components, and other favorable components as well as resin compositions for use in production of the polyester resins (A) and (B) will be described below. The description is common to the polyester resins (A) and (B), unless otherwise indicated.

Typical examples of the polybasic acid components include aromatic dicarboxylic acids such as terephthalic acid, isophthalic acid, phthalic acid, phthalic anhydride, naphthalenedicarboxylic acid, and biphenyldicarboxylic acid; saturated or unsaturated aliphatic dicarboxylic acids such as oxalic acid, succinic acid, succinic anhydride, adipic acid, azelaic acid, sebacic acid, dodecanedioic acid, hydrogenated dimer acid, fumaric acid, maleic acid, maleic anhydride, itaconic acid, itaconic anhydride, citraconic acid, citraconic anhydride, dimer acid; alicyclic dicarboxylic acids such as 1,4-cyclohexanedicarboxylic acid, 1,3-cyclohexanedicarboxylic acid, 1,2-cyclohexanedicarboxylic acid, 2,5-norbornene dicarboxylic acid, 2,5-norbornenedicarboxylic anhydride, tetrahydrophthalic acid, and tetrahydrophthalic anhydride; and the like. A small amount of 5-sodium sulfoisophthalic acid or 5-hydroxyisophthalic acid may be used as needed.

A trifunctional or higher polybasic acid may also be used, and examples thereof include trimellitic acid, pyromellitic acid, benzophenonetetracarboxylic acid, trimellitic anhydride, pyromellitic anhydride, benzophenonetetracarboxylic anhydride, trimesic acid, ethylene glycol bis(anhydrotrimellitate), glycerol tris(anhydrotrimellitate), 1,2,3,4-butanetetracarboxylic acid and the like. The content of such a trifunctional or higher polybasic acid is normally 10 mol % or less, more preferably 5 mol % or less, in the polybasic acid components for preservation of favorable film processability.

Among the polybasic acid components, use of an aromatic polybasic acid is preferable, and the content thereof in the polybasic acid components for the polyester resin is preferably 50 mol % or more, more preferably 60 mol % or more. Increase of the rate of aromatic polybasic acid component leads to improvement of processability, water resistance, solvent resistance and others of the resin film formed form the aqueous dispersion. As aromatic polybasic acids, terephthalic acid and isophthalic acid are preferable because they are produced commercially in greater amounts and thus cheaper.

Examples of the polyhydroxy alcohol components include aliphatic glycols, alicyclic glycol, ether bond-containing glycols and the like. Typical examples of the aliphatic glycols include ethylene glycol, 1,2-propanediol, 1,3-propanediol, 1,4-butanediol, 2-methyl-1,3-propanediol, 1,5-pentanediol, neopentylglycol, 1,6-hexanediol, 3-methyl-1,5-pentanediol, 1,9-nonanediol, 2-ethyl-2-butylpropanediol and the like. Typical examples of the alicyclic glycols include 1,4-cyclohexanedimethanol and the like. Typical examples of the ether bond-containing glycols include diethyleneglycol, triethyleneglycol, dipropyleneglycol, and bisphenol (bisphenol A) ethyleneoxide adducts such as 2,2-bis[4-(hydroxyethoxy)phenyl]propane, bisphenol (bisphenol S) ethyleneoxide adducts such as bis[4-(hydroxyethoxy)phenyl]sulfone, polyethylene glycol, polypropylene glycol, polytetramethylene glycol and the like. Examples of the long-chain ether bond-containing glycols include polyethylene glycol, polypropylene glycol and polytetramethylene glycol, having a molecular weight of 500 or more and the like.

Examples of the trifunctional or higher polyhydroxy alcohols include glycerol, trimethylolethane, trimethylolpropane, pentaerythritol and the like.

Among the polyhydroxy alcohol components above, ethylene glycol or neopentylglycol is particularly preferable, and the total content of ethylene glycol and neopentylglycol is 50 mol % or more, more preferably 60 mol % or more, in the alcohol components for the polyester resin. Ethylene glycol and neopentylglycol are commercially available and cheaper, and give a resin film favorably balanced in various properties. Ethylene glycol improves solvent resistance of resin film, while neopentylglycol in particular weather resistance of resin film. The content of ethylene glycol or neopentylglycol is preferably 20 to 80 mol %, more preferably 30 to 70 mol %, in the alcohol components.

A aliphatic acid such as lauric acid, myristic acid, palmitic acid, stearic acid, oleic acid, linoleic acid and linolenic acid, ester-forming derivatives thereof; a monocarboxylic acid such as benzoic acid, p-tert-butylbenzoic acid, cyclohexanoic acid and 4-hydroxyphenylstearic acid, a monoalcohol such as stearyl alcohol and 2-phenoxyethanol, a hydroxycarboxylic acid such as ε-caprolactone, lactic acid, β-hydroxybutyric acid and p-hydroxybenzoic acid, and ester-forming derivatives thereof may be added as a comonomer to the polyester resin as needed.

Favorable combinations in the composition of the polyester resin (A) and the polyester resin (B) include the followings:

Combination (1);
Polyester resin (A) (aromatic dicarboxylic acid, aromatic tricarboxylic acid, aliphatic glycol); and
Polyester resin (B) (aromatic dicarboxylic acid, aliphatic dicarboxylic acid, aromatic tricarboxylic acid, aliphatic glycol).

Combination (2);
Polyester resin (A) (aromatic dicarboxylic acid, aromatic tricarboxylic acid, aliphatic glycol); and
Polyester resin (B) (aromatic dicarboxylic acid, aromatic tricarboxylic acid, aliphatic glycol, long-chain ether bond-containing glycol).
Combination (3);
Polyester resin (A) (aromatic dicarboxylic acid, aromatic tricarboxylic acid, aliphatic dicarboxylic acid, aliphatic glycol); and
Polyester resin (B) (aromatic dicarboxylic acid, aliphatic dicarboxylic acid, aromatic tricarboxylic acid, aliphatic glycol).

Combination (4);
Polyester resin (A) (aromatic dicarboxylic acid, aliphatic glycol); and
Polyester resin (B) (aromatic dicarboxylic acid, aliphatic dicarboxylic acid, aromatic tricarboxylic acid, aliphatic glycol).
Combination (5);
Polyester resin (A) (aromatic dicarboxylic acid, aliphatic glycol); and
Polyester resin (B) (aromatic dicarboxylic acid, aromatic tricarboxylic acid, aliphatic glycol, long-chain ether bond-containing glycol).
Among the combinations above, combinations (1) to (3) are preferable.

The polyester resin (A) and/or the polyester resin (B) preferably have carboxyl groups at the terminals. A polyester resin having carboxyl groups at the terminals generates the carboxylate anions during production of an aqueous dispersion by neutralization of part or all of the carboxyl groups by addition of a basic component, and the polyester resin fine particles remain dispersed stably without aggregation by the electrical repulsive force among the anions, and thus, it is possible to prepare a polyester resin aqueous dispersion favorable in dispersion stability without use of a surfactant. A film prepared from an aqueous dispersion containing a surfactant is likely less water resistant.

The polyester resins (A) and (B) are dispersed in an aqueous medium. The aqueous medium is a medium containing water as a principal component and may contain a basic compound described below and an organic solvent, but the content of the organic solvent contained in the polyester resin aqueous dispersion is preferably 3 percent by mass or less, more preferably 2 percent by mass or less, and particularly preferably 1 percent by mass or less, for improvement of environmental issue and working environment and reduction of the residual organic solvent having an adverse effect on the resin-film physical properties.

The content of the polyester resins including the polyester resins (A) and (B) in the polyester resin aqueous dispersion according to the present invention is not particularly limited and may be selected properly according to a film-forming method, a kind of material to be coated, desirable thickness and properties of the resin film and others, but is preferably 1 to 50 percent by mass, more preferably 5 to 45 percent by mass, and particularly preferably 10 to 40 percent by mass, with respect to the total amount of the aqueous dispersion for preserving favorable viscosity during coating and giving favorable film-forming properties.

The particle diameter of the polyester resin in the aqueous dispersion is not particularly limited, but the volume-average particle diameter of each resin is preferably less than 500 nm, more preferably less than 300 nm, and particularly preferably 200 nm, for preserving favorable storage stability.

A method of producing the polyester resin aqueous dispersion according to the present invention will be described hereinafter.
The polyester resin aqueous dispersion according to the present invention can be prepared by mixing and stirring a polyester resin (A) aqueous dispersion and a polyester resin (B) aqueous dispersion at a specific rate. These dispersions are mixed easily by using a common stirrer.

The method of preparing the polyester resin (A) aqueous dispersion is not particularly limited. It can be prepared by a known method, for example, by agitating a polyester resin (A) having an acid value of 8 to 40 mg-KOH/g, an organic solvent, water, and a basic compound under heat at 40˚C to 100˚C. Then, a polyester resin (A) aqueous dispersion having an organic solvent content reduced to 3 percent by mass or less is obtained by removing the organic solvent from the polyester resin aqueous dispersion thus obtained. It is possible to obtain a homogeneous polyester resin (A) aqueous dispersion containing no precipitate without phase separation by removing undispersed matter and aggregate by filtration as needed.

The method of preparing the polyester resin (B) aqueous dispersion is not particularly limited. It can be formed by a known method, for example, in two steps of dissolving a polyester resin (B) having an acid value of 2 to 10 mg-KOH/g substantially in an organic solvent (dissolution step) and dispersing the solution of the polyester resin dissolved in the organic solvent in water with a basic compound (phase-inversion emulsification step). Then, a polyester resin (B) aqueous dispersion having an organic solvent content reduced to 3 percent by mass or less is obtained by removing the organic solvent form the polyester resin aqueous dispersion thus obtained. It is possible to obtain a homogeneous polyester resin (B) aqueous dispersion containing no precipitate without phase separation, by removing undispersed matter and aggregate by filtration as needed.

The organic solvent has preferably solubility in water of 5 g/L or more, more preferably 10 g/L or more, at 20˚C. The boiling point of the organic solvent is preferably 250˚C or lower, more preferably 180˚C or lower, and still more preferably 100˚C or lower, because solvents having a lower boiling point are easily evaporated by drying. In particular, solvents having a boiling point of 100˚C or lower or azeotropic with water are preferable, because they are easily removed from aqueous medium. Examples thereof include ethanol, n-propanol, isopropanol, n-butanol, methylethylketone, tetrahydrofuran, ethylene glycol monobutylether and the like. The organic solvents may be used after two or more of them are mixed.

The basic compound is preferably an organic amine having a boiling point of 250˚C or lower, preferably 160˚C or lower, or ammonia, from the point of vaporization during film formation. In particular, ammonia and triethylamine are most preferable. The amount of the basic compound used is preferably an amount at least partially neutralizing the carboxyl groups contained in the polyester resin, i.e., an equivalence of 0.4 to 10, more preferably 0.6 to 8, and particularly preferably 0.8 to 6 to the carboxyl groups. It is possible to obtain a polyester resin aqueous dispersion superior particularly in storage stability by adjusting the content of the basic compound in the range above.

The organic solvent is removed, for example, by 1) a method of mixing a polyester resin (A) aqueous dispersion and a polyester resin (B) aqueous dispersion each having an organic solvent content of 3 percent by mass or less, or 2) a method of removing the organic solvent from the polyester resin aqueous dispersion having an organic solvent content of more than 3 percent by mass after an aqueous polyester resin (A) dispersion and an aqueous polyester resin (B) dispersion are mixed. In particular, the method 1), in which quality control of each aqueous dispersion is easier, is preferable.

Specifically, the organic solvent can be easily eliminated by repeating distillation of an organic solvent from the aqueous dispersion under atmospheric or reduced pressure and addition of water thereto.

Various additives including chemicals such as a leveling agent, an antifoam, an anti-popping agent, a pigment-dispersant, an ultraviolet absorbent, a fungicide and an antiseptic, pigments or dyes such as titanium oxide, zinc white and carbon black, water-soluble polymers such as polyvinylalcohol and polyethyleneoxide may be added as needed to the polyester resin aqueous dispersion according to the present invention. It is also possible to adjust viscosity and compatibility to the base material of the dispersion by adding water and an organic solvent.

Hereinafter, a method of using the polyester resin aqueous dispersion according to the present invention will be described.

Because the resin aqueous dispersion according to the present invention is superior in film-forming properties, it is possible to form a uniform resin film on the surface of various base materials by applying and heat-treating the dispersion uniformly thereon by a known film-forming method such as dipping, brush coating, spray coating, or curtain flow coating. Examples of the heating apparatuses for use then include common hot air oven, infrared ray heater and the like. The heating temperature and the heating period are determined properly according to the kinds of polyester resins and base material used. When the polyester resin aqueous dispersion according to the present invention is applied on a commonly-used base material, polyethylene terephthalate (PET) film, the heating temperature is preferably 80 to 130°C, considering economical efficiency. The thickness of the resin film is selected properly according to its application and purpose, but preferably 0.1 to 30 $\mu$m, more preferably 0.3 to 10 $\mu$m.

Examples of the base material for film formation include thermoplastic resin films, aluminum foil and the laminates thereof and the like.

It is possible to prepare a packaging bag superior in bonding properties even when prepared by heat-fusion at low temperature, by forming a film of the polyester resin aqueous dispersion according to the present invention on a base material, piling two film-carrying base materials above with the film-carrying faces in contact with each other, and heat-fusing (heat-sealing) the laminate by a known method.

EXAMPLES

Hereinafter, the present invention will be described specifically with reference to Examples.

(1) Composition of polyester resin

The composition of polyester resin was determined by 1H-NMR analysis (300 MHz, manufactured by Varian. Inc). Resins containing a monomer having no peak allowing identification on 1H-NMR spectrum were decomposed with methanol in a sealed tube at 230°C for 3 hours, and quantitative analysis was made by gas chromatographic analysis.

(2) Number-average molecular weight of polyester resin

The number-average molecular weight was determined by GPC analysis (by using LC-10ADvp liquid-supplying unit and ultraviolet-visible spectrophotometer SPD-6AV manufactured by Shimadzu Corporation, detection wavelength: 254 nm, solvent: tetrahydrofuran, polystyrene conversion).

(3) Glass transition temperature of polyester resin

The glass transition temperature (Tg) was determined by analyzing 10 mg of a polyester resin sample in a DSC (differential scanning calorimetry) apparatus (DSC7, manufactured by PerkinElmer Japan Co., Ltd.) at a heating speed of 10°C/minute, determining two inflection-point temperatures due to glass transition in the temperature rise curve obtained, and obtaining the intermediate value thereof.

(4) Acid value of polyester resin

The acid value was obtained by dissolving 0.5 g of a polyester resin sample in 50 ml of water/dioxane =1/9 (by volume), determining the amount of KOH consumed in neutralization by titration of the solution with KOH in the presence of an indicator cresol red, and converting the amount to a value per 1 g of the polyester resin.

(5) Solid content concentration of aqueous dispersion

The solid content concentration was calculated from the weight of an aqueous dispersion (X g) weighed in an amount of approximately 1 g and that of the dispersion (solid content) remaining after drying at 150°C for 2 hours (Y g), according to the following Formula:

$$\text{Solid content concentration (percent by mass)} = Y/X \times 100$$

(6) Content of organic solvent in aqueous dispersion

The content of an organic solvent was determined by injecting an aqueous dispersion diluted with water directly into a gas chromatograph GC-8A manufactured by Shimadzu Corporation, [FID detector, carrier gas: nitrogen, column filler: PEG-HT (5%)-UNIPORT HP (60/80 mesh) manufactured by GL Science Inc., column size: diameter 3 mm×3 m, sample injection temperature: 150˚C, column temperature: 60˚C, and internal standard: n-butanol]. Its detection limit was 0.01 percent by mass.

(7) Volume average diameter of particles in aqueous dispersion

The volume average diameter was determined by analyzing an aqueous dispersion diluted to 0.1% with water using MICROTRAC UPA (model 9340-UPA) manufactured by Nikkiso Co., Ltd.

(8) Thickness of resin film

The thickness of a base material is determined with a thickness gage (MICROFINE, manufactured by Union Tool Co); the thickness of the base material carrying a resin film formed with an aqueous dispersion was determined similarly; and the difference between them was the thickness of the resin film.

(9) Low-temperature filming property (appearance)

An aqueous dispersion was applied on the corona-treated surface of a biaxially oriented PET film (manufactured by Unitika Ltd., thickness: 38 μm) in a desktop coating machine (Film Applicator No.542-AB equipped with a bar coater, manufactured by Yasuda-Seiki-Seisakusho. Ltd), and the resulting film was dried in a hot air drier kept at 100˚C for 1 minute, to form a resin film having a thickness of 1 μm. The cracks and the transparency of the resin film were observed visually, and the result was evaluated according to the following criteria. The symbol ○ indicates that the result was satisfactory.

    ○: There is no crack, and the film is transparent.
    ×: There are some cracks, and the film is opaque.

(10) Low-temperature filming property (adhesive properties)

A film was formed similarly to (9) above. Then, the adhesive tape (width 18 mm) specified in JIS Z-1522 was bonded to the resin film with its terminal left unbound; after sufficient bonding while the tape was abraded with an eraser, the terminal of the adhesive tape was set rectangularly and peeled off instantly from the film. The resin film remaining bonded to the adhesive tape face peeled off was analyzed with a surface infrared spectrometer (SYSTEM 2000 using a Ge60˚50×20× mm prism, manufactured by PerkinElmer Japan Co., Ltd.) and evaluated according to the following criteria. The symbol ○ indicates that the result was satisfactory.

    ○: There is no peak derived from the resin film on the adhesive tape face.
    ×: There are peaks derived from the resin film on the adhesive tape face.

(11) Blocking resistance of resin film

A resin film having a thickness of 1 μm was formed on the corona-treated face of a PET film similarly to (9) above; a biaxial oriented PET film was placed on the film-carrying face of the resin film with its the non-corona-treated face (non-coated face) in contact and left as it was under a load of 500 Pa in an atmosphere at 38˚C for 24 hours and then cooled to 25˚C; the two PET films were separated from each other by hand; and the easiness in separating the PET films was evaluated according to the following criteria. The symbol O indicates that the result was satisfactory.

    ○: PET films were separated easily, and there was no fusion mark.
    ×: There was resistance in separating the PET films and also some fusion mark between the films.

(12) Low-temperature heat-sealing property

A resin film having a thickness of 1 μm was formed on a PET film similarly to (9) above; two resin film-carrying PET films were piled with their coated surface in contact with each other and pressed in a heat-pressing machine (seal pressure: 0.2 MPa, 10 seconds) at 130°C. The sample was cut into pieces of 25 mm in width, the peeling strength of the film was determined next day with a tensile tester (Intesco Precision Universal tester 2020, manufactured by Intesco Co. Ltd.) at a tension speed of 200 mm/minute and a tension angle of 180°, and thus the heat-sealing property was evaluated. A peeling strength of 0.08N/25 mm or more is practical in strength.

The polyester resin used in Examples and Comparative Examples were prepared in the following manner.

[Preparation of polyester resin P-1]

A mixture of 2,907 g of terephthalic acid, 1,246 g of isophthalic acid, 1,133 g of ethylene glycol, and 1,614 g of neopentylglycol were heated in an autoclave at 260°C for 4 hours, allowing esterification reaction. Then, 1.8 g of antimony trioxide was added thereto as a catalyst; the system was heated to 280°C; and then, the pressure of the system was reduced gradually to 13 Pa in 1.5 hours. The polycondensation reaction was continued under the condition; after 6 hours, the system was brought to atmospheric pressure with nitrogen gas; after the system was cooled to 270°C, 105 g of trimellitic acid was added thereto; and the mixture was stirred at 250°C for 2 hours, allowing depolymerization reaction. Then, the system was brought into a pressurized state with nitrogen gas, and the resin was extruded in sheet shape. After cooled to room temperature, the resin was pulverized in a crusher; and particles thereof having a diameter of 1 to 6 mm were collected with a sieve, to give a particulate polyester resin P-1.

[Preparation of polyester resin P-2]

A mixture of 2,077 g terephthalic acid, 2,077 g of isophthalic acid, 1,210 g of ethylene glycol, and 1,484 g of neopentylglycol were heated in an autoclave at 240°C for 4 hours, allowing esterification reaction. Then, 3.3 g of zinc acetate dihydrate was added as a catalyst; the system was heated to 265°C; and the pressure of the system was reduced gradually to 13 Pa in 1.5 hours. The polycondensation reaction was continued under the condition; after 4 hours, the system was brought to atmospheric pressure with nitrogen gas; after the system was cooled to 260°C, 32 g of trimellitic acid was added thereto; and the mixture was stirred at 260°C for 2 hours, allowing depolymerization reaction. Then, the pressure of the system was reduced gradually to 13 Pa in 30 minutes, and the system was then defoamed for 1 hour. Then, the system was brought into a pressurized state with nitrogen gas, and the resin was extruded in strand shape, water-cooled, and cut into pellets (diameter: approximately 3 mm, length: approximately 3 mm), to give a polyester resin P-2.

[Preparation of polyester resin P-3]

A mixture of 1,911 g of terephthalic acid, 1,911 g of isophthalic acid, 292 g of adipic acid, 1,210 g of ethylene glycol, and 1,484 g of neopentylglycol were heated in an autoclave at 240°C for 4 hours, allowing esterification reaction. Then, 3.3 g of zinc acetate dihydrate was added thereto as a catalyst; the system was heated to 265°C; and then, the pressure of the system was reduced gradually to 13 Pa in 1.5 hours. The polycondensation reaction was continued under the condition; after 4 hours, the system was brought to atmospheric pressure with nitrogen gas; after the system was cooled to 260°C, 38 g of trimellitic anhydride was added thereto; and the mixture was stirred at 260°C for 2 hours, allowing depolymerization reaction. Then, the pressure of the system was reduced gradually to 13 Pa in 30 minutes and then, the system was defoamed for one hour. The system was then brought into a pressurized state with nitrogen gas, and the resin was extruded in strand shape, water-cooled, and cut into pellets (diameter: approximately 3 mm, length: approximately 3 mm), to give a polyester resin P-3.

[Preparation of polyester resin P-4]

A mixture of 2,492 g of terephthalic acid, 623 g of isophthalic acid, 1,263 g of sebacic acid, 1,311 g of ethylene glycol, and 1,315 g of neopentylglycol were heated in an autoclave at 250°C for 4 hours, allowing esterification reaction. Then, 3.3 g of zinc acetate dihydrate was added thereto as a catalyst; the system was heated to 270°C; and then, the pressure of the system was reduced gradually to 13 Pa in 1.5 hours. The polycondensation reaction was continued under the condition; after 4 hours, the system was brought to atmospheric pressure with nitrogen gas; after the system was cooled to 265°C, 38 g of trimellitic anhydride was added thereto; and the mixture was stirred at 265°C for 2 hours, allowing depolymerization reaction. The system was then brought into a pressurized state with nitrogen gas, and the resin was extruded in sheet shape. It was cooled to room temperature, to give a sheet-shaped polyester resin P-4.

[Preparation of polyester resin P-5]

A mixture of 2,492 g of terephthalic acid, 415 g of isophthalic acid, 1,516 g of sebacic acid, 1,210 g of ethylene glycol, and 1,484 g of neopentylglycol were heated in an autoclave at 250˚C for 4 hours, allowing esterification reaction. Then, 3.3 g of zinc acetate dihydrate was added thereto as a catalyst; the system was heated to 270˚C; and then, the pressure of the system was reduced gradually to 13 Pa in 1.5 hours. The polycondensation reaction was continued under the condition; after 4 hours, the system was brought to atmospheric pressure with nitrogen gas; after the system was cooled to 265˚C, 29 g of trimellitic anhydride was added thereto; and the mixture was stirred at 265˚C for 2 hours, allowing depolymerization reaction. The system was then brought into a pressurized state with nitrogen gas, and the resin was extruded in sheet shape. It was cooled to room temperature, to give a sheet-shaped polyester resin P-5.

[Preparation of Polyester resin P-6]

A mixture of 2,077 g of terephthalic acid, 2,077 g of isophthalic acid, 1,125 g of Polytetrafuran 1000, 1,358 g of ethylene glycol, and 1,510 g of neopentylglycol were heated in an autoclave at 240˚C for 4 hours, allowing esterification reaction. Then, 12.8 g of tetra-n-butyl titanate was added thereto as a catalyst; the system was heated to 250˚C; and then, the pressure of the system was reduced gradually to 13 Pa in 1.5 hours. The polycondensation reaction was continued under the condition; after 4 hours, the system was brought to atmospheric pressure with nitrogen gas; 32 g of trimellitic acid was added thereto; and the mixture was stirred at 250˚C for 2 hours, allowing depolymerization reaction. The system was then brought into a pressurized state with nitrogen gas, and the resin was extruded in sheet shape. It was cooled to room temperature, to give a sheet-shaped polyester resin P-6.

[Preparation of polyester resin P-7]

A mixture of 2,907 g of terephthalic acid, 1,246 g of isophthalic acid, 1,133 g of ethylene glycol, and 1,614 g of neopentylglycol were heated in an autoclave at 260˚C for 4 hours, allowing esterification reaction. Then, 1.8 g of antimony trioxide was added thereto as a catalyst; the system was heated to 280˚C; and then, the pressure of the system was reduced gradually to 13 Pa in 1.5 hours. The polycondensation reaction was continued under the condition; after 6 hours, the system was brought to atmospheric pressure with nitrogen gas; after the system was cooled to 270˚C, 125 g of isophthalic acid and 105 g of trimellitic acid were added thereto; and the mixture was stirred at 250˚C for 2 hours, allowing depolymerization reaction. The system was then brought into a pressurized state with nitrogen gas, and the resin was extruded in sheet shape. It was cooled to room temperature sufficiently and pulverized in a crusher, and particles thereof having a diameter of 1 to 6 mm were collected with a sieve, to give a particulate polyester resin P-7.

[Preparation of polyester resin P-8]

A mixture of 2,492 g of terephthalic acid, 623 g of isophthalic acid, 1,263 g of sebacic acid, 1,311 g of ethylene glycol, and 1,315 g of neopentylglycol were heated in an autoclave at 250˚C for 4 hours, allowing esterification reaction. Then, 3.3 g of zinc acetate dihydrate was added thereto as a catalyst; the system was heated to 270˚C; and then, the pressure of the system was reduced gradually to 13 Pa in 1.5 hours. The polycondensation reaction was continued under the condition; after 4 hours, the system was brought to atmospheric pressure with nitrogen gas; after the system was cooled to 265˚C, 125 g of isophthalic acid and 38 g of trimellitic anhydride was added thereto; and the mixture was stirred at 265˚C for 2 hours, allowing depolymerization reaction. The system was then brought into a pressurized state with nitrogen gas, and the resin was extruded in sheet shape. It was cooled to room temperature, to give a sheet-shaped polyester resin P-8.

[Preparation of polyester resin P-9]

A mixture of 2,907 g of terephthalic acid, 664 g of isophthalic acid, 707 g of sebacic acid, 1,133 g of ethylene glycol, and 1,614 g of neopentylglycol were heated in an autoclave at 260˚C for 4 hours, allowing esterification reaction. Then, 1.8 g of antimony trioxide was added thereto as a catalyst; the system was heated to 280˚C; and then, the pressure of the system was reduced gradually to 13 Pa in 1.5 hours. The polycondensation reaction was continued under the condition; after 6 hours, the system was brought to atmospheric pressure with nitrogen gas; after the system was cooled to 270˚C, 105 g of trimellitic acid was added thereto; and the mixture was stirred at 250˚C for 2 hours, allowing depolymerization reaction. The system was then brought into a pressurized state with nitrogen gas, and the resin was extruded in sheet shape. It was cooled to room temperature sufficiently and pulverized in a crusher, and particles thereof having a diameter of 1 to 6 mm were collected with a sieve, to give a particulate polyester resin P-9.

[Preparation of polyester resin P-10]

A mixture of 1,744 g of terephthalic acid, 1,744 g of isophthalic acid, 584 g of adipic acid, 1,210 g of ethylene glycol, and 1,484 g of neopentylglycol were heated in an autoclave at 240°C for 4 hours, allowing esterification reaction. Then, 3.3 g of zinc acetate dihydrate was added thereto as a catalyst; the system was heated to 265°C; and then, the pressure of the system was reduced gradually to 13 Pa in 1.5 hours. The polycondensation reaction was continued under the condition; after 4 hours, the system was brought to atmospheric pressure with nitrogen gas; after the system was cooled to 260°C, 38 g of trimellitic anhydride was added thereto; and the mixture was stirred at 260°C for 2 hours, allowing depolymerization reaction. Then, the pressure of the system was reduced gradually to 13 Pa in 30 minutes and then, the system was defoamed for one hour. The system was then brought into a pressurized state with nitrogen gas, and the resin was extruded in strand shape, water-cooled, and cut into pellets (diameter approximately 3 mm, length approximately 3 mm), to give a polyester resin P-10.
Results of analyzing the properties of the polyester resins thus obtained are summarized in Table 1.
[Table 1]

| Polyester resin | | | P-1 | P-2 | P-3 | P-4 | P-5 | P-6 | P-7 | P-8 | P-9 | P-10 |
|---|---|---|---|---|---|---|---|---|---|---|---|---|---|
| Polyester resin composition | Acid component (molar rate) | TPA | 70 | 50 | 46 | 60 | 60 | 50 | 70 | 60 | 70 | 42 |
| | | IPA | 30 | 50 | 46 | 15 | 10 | 50 | 33 | 18 | 16 | 42 |
| | | SEA | - | - | - | 25 | 30 | - | - | 25 | 14 | - |
| | | ADA | - | - | 8 | - | - | - | - | - | - | 16 |
| | | TMA | 2 | 0.6 | 0.8 | 0.8 | 0.6 | 0.6 | 2 | 0.8 | 2 | 0.8 |
| | | Total | 102.0 | 100.6 | 100.8 | 100.8 | 100.6 | 100.6 | 105.0 | 103.8 | 102.0 | 100.8 |
| | Alcohol component[a] (molar rate) | EG | 45 | 50 | 50 | 55 | 50 | 46.5 | 45 | 55 | 45 | 50 |
| | | NPG | 55 | 50 | 50 | 45 | 50 | 49 | 55 | 45 | 55 | 50 |
| | | PTMG | - | - | - | - | - | 4.5 | - | - | - | - |
| | | Total | 100 | 100 | 100 | 100 | 100 | 100 | 100 | 100 | 100 | 100 |
| Number-average molecular weight | | | 7000 | 13000 | 15000 | 15000 | 18000 | 11000 | 3000 | 5000 | 8000 | 15000 |
| Glass transition temperature (°C) | | | 67 | 63 | 51 | 19 | 9 | 15 | 65 | 17 | 40 | 41 |
| Acid value (mg-KOH/g) | | | 15 | 6 | 7 | 6 | 4 | 6 | 32 | 22 | 15 | 6 |

a) TPA: terephthalic acid, IPA: isophthalic acid, SEA: sebacic acid, ADA: adipic acid, TMA: trimellitic acid, EG: ethylene glycol, NPG: neopentylglycol, PTMG: polytetramethylene glycol (Polytetrafuran 1000)

<Example 1>

(Production of polyester resin aqueous dispersion E-1)

300 g of polyester resin P-1, 180 g of isopropanol, 10 g of triethylamine, and 510 g of distilled water were placed in a stirrer equipped with a jacketed sealable 2-liter glass container (T.K. Robomix, manufactured by Tokushu Kika Kogyo Co., Ltd.) and agitated with its agitating-blade (Homodisper) at rotational velocity of 7,000 rpm. The mixture was agitated for 60 minutes at an internal temperature kept to 73 to 75°C by heating with hot water circulating in the jacket. Then, the mixture was cooled to room temperature (approximately 25°C) while cold water was supplied into the jacket and the mixture was stirred at lower rotational velocity of 5,000 rpm, and the mixture was filtered through a 300-mesh stainless steel filter, to give an polyester resin aqueous dispersion having an organic solvent content of more than 3 percent by mass. The dispersion was milky white and homogeneous.

Then, 500 g of the polyester resin aqueous dispersion thus obtained and 115 g of distilled water were placed in a 1-L round-bottomed flask; an mechanical stirrer and a Liebig condenser were connected to the flask; and the flask was heated in an oil bath, allowing vaporization of the aqueous medium under atmospheric pressure. Heating was terminated after approximately 153 g of the aqueous medium was distilled, and the mixture was allowed to cool to room temperature. After cooling, the liquid in the flask was filtered through a 600-mesh (twill dutch weave) stainless steel filter, and the solid content concentration in the filtrate was found to be 32.5 percent by mass. Distilled water was added to the filtrate for adjustment of the solid content while the mixture was stirred. The properties of the polyester resin aqueous dispersion E-1 were as follows:

    Solid content concentration: 30 percent by mass
    Organic solvent content: 0.4 percent by mass
    Volume-average particle diameter: 150 nm

(Preparation of polyester resin aqueous dispersion E-4)

[Dissolution step]

400 g of polyester resin P-4 and 600 g of MEK were placed in a 2-L polyethylene container and stirred with a stirrer (MAZELA 1000, manufactured by Tokyo Rikakikai Co., Ltd) while the container was heated with hot water at approximately 60°C to dissolve the polyester resin completely in MEK, to give a polyester resin solution having solid content concentration of 40 percent by mass.

[Phase-inversion emulsification step]

Then, 500 g of the polyester resin solution was placed in a glass container with jacket (capacity: 2L); and the mixture was stirred with a stirrer (MAZELA 1000, manufactured by Tokyo Rikakikai Co. Ltd.) at rotational velocity of 600 rpm, while the internal temperature of the system was kept at 13°C, as cold water was supplied into the jacket. Then, 13 g of triethylamine was added thereto as a basic compound while the mixture was stirred, and 487 g of distilled water at 13°C was added thereto additionally at rate of 100 g/min. During addition of all distilled water, the internal temperature of the system was kept at 15°C or lower. After addition of distilled water, the mixture was stirred for 30 minutes, to give an aqueous dispersion having solid content concentration of 20 percent by mass.

[Solvent-removing step]

Subsequently, 800 g of the polyester resin aqueous dispersion obtained was placed in a round-bottomed flask; a mechanical stirrer and a Liebig condenser were connected thereto; and the aqueous medium was vaporized in an amount of approximately 284 g while the flask was heated in an oil bath under atmospheric pressure. After cooling, the liquid in the flask was filtered through a 600-mesh (twill dutch weave) stainless steel filter, and the solid content concentration of the filtrate was found to be 31.0 percent by mass. Distilled water was added to the filtrate for adjustment of the solid content while the mixture was stirred. The properties of the polyester resin aqueous dispersion E-4 were as follows:

    Solid content concentration: 30 percent by mass
    Organic solvent content: 0.1 percent by mass
    Volume-average particle diameter: 130 nm

Subsequently, 70 g of the resin aqueous dispersion E-1 was used as the polyester resin (A) aqueous dispersion and 30 g of the resin aqueous dispersion E-4 used as the polyester resin (B) aqueous dispersion was added to E-1, and the mixture was stirred at room temperature approximately for 5 minutes, to give an polyester resin aqueous dispersion E-11.

<Example 2>

A polyester resin aqueous dispersion E-12 was prepared in a similar manner to Example 1, except that 30 g of the polyester resin aqueous dispersion E-1 was used as the polyester resin (A) aqueous dispersion and added to 70 g of the resin aqueous dispersion E-4 used as the polyester resin (B) aqueous dispersion .

<Example 3>

(Preparation of polyester resin aqueous dispersion E-2)

[Dissolution step]

400 g of polyester resin P-2 and 600 g of MEK were placed in a 2-L polyethylene container and stirred with a stirrer (MAZELA 1000, manufactured by Tokyo Rikakikai Co., Ltd) while the container was heated with hot water at approximately 60°C to dissolve the polyester resin completely in MEK, to give a polyester resin solution having solid content concentration of 40 percent by mass.

[Phase-inversion emulsification step]

Subsequently, 500 g of the polyester resin solution was placed in a glass container with jacket (capacity: 2L); and the mixture was stirred with a stirrer (MAZELA 1000, manufactured by Tokyo Rikakikai Co. Ltd.) at rotational velocity of 600 rpm while the internal temperature of the system was kept at 13°C, as cold water was supplied into the jacket. Then, 3.2 g of triethylamine was added thereto as a basic compound while the mixture was stirred, and then, 496.8 g of distilled water at 13°C was added additionally at rate of 100 g/min. During addition of all distilled water, the internal temperature of the system was kept at 15°C or lower. After addition of distilled water, the mixture was stirred for 30 minutes, to give an aqueous dispersion having solid content concentration of 20 percent by mass.

[Solvent-removing step]

Then, 800 g of the polyester resin aqueous dispersion obtained was placed in a round-bottomed flask; a mechanical stirrer and a Liebig condenser were connected thereto; and the aqueous medium was vaporized in an amount of approximately 284 g while the flask was heated in an oil bath under atmospheric pressure. After cooling, the liquid in the flask was filtered through a 600-mesh (twill dutch weave) stainless steel filter, and the solid content concentration of the filtrate was found to be 31.0 percent by mass. Distilled water was added to the filtrate for adjustment of the solid content while the mixture was stirred. The properties of the polyester resin aqueous dispersion E-2 were as follows:

Solid content concentration: 30 percent by mass
Organic solvent content: 0.1 percent by mass
Volume-average particle diameter: 80 nm

Subsequently, 50 g of the resin aqueous dispersion E-2 was used as the polyester resin (A) aqueous dispersion and 50 g of the resin aqueous dispersion E-4 used as the polyester resin (B) aqueous dispersion was added to E-2, and the mixture was stirred at room temperature approximately for 5 minutes, to give a polyester resin aqueous dispersion E-13.

<Example 4>

A polyester resin aqueous dispersion E-14 was prepared in a similar manner to Example 3, except that 30 g of the polyester resin aqueous dispersion E-2 was used as the polyester resin (A) aqueous dispersion and added to 70 g of the resin aqueous dispersion E-4 used as the polyester resin (B) aqueous dispersion.

<Example 5>

(Preparation of polyester resin aqueous dispersion E-3)

A polyester resin aqueous dispersion E-3 was prepared in a similar manner to E-2, except that the polyester resin P-3 was used and the amounts of the triethylamine and distilled water were changed respectively to 5 g and 495 g. The properties of the polyester resin aqueous dispersion were as follows:

    Solid content concentration: 30 percent by mass
    Organic solvent content: 0.1 percent by mass
    Volume-average particle diameter: 85 nm

Then, 50 g of the resin aqueous dispersion E-3 was used as the polyester resin (A) aqueous dispersion and 50 g of the resin aqueous dispersion E-4 as the polyester resin (B) aqueous dispersion, and the mixture was stirred at room temperature approximately for 5 minutes, to give a polyester resin aqueous dispersion E-15.

<Example 6>

(Preparation of polyester resin aqueous dispersion E-5)

A polyester resin aqueous dispersion E-5 was prepared in a similar manner to E-4, except that the polyester resin used was P-5 and the amounts of triethylamine and distilled water were changed respectively to 22 g and 478 g. The properties of the polyester resin aqueous dispersion were as follows:

    Solid content concentration: 30 percent by mass
    Organic solvent content: 0.1 percent by mass
    Volume-average particle diameter: 140 nm

Then, 40 g of the resin aqueous dispersion E-1 was used as the polyester resin (A) aqueous dispersion and 60 g of the resin aqueous dispersion E-5 used as the polyester resin (B) aqueous dispersion was added to E-1, and the mixture was stirred at room temperature approximately for 5 minutes, to give a polyester resin aqueous dispersion E-16.

<Example 7>

(Preparation of polyester resin aqueous dispersion E-6)

A polyester resin aqueous dispersion E-6 was prepared in a similar manner to E-4, except that the polyester resin used was P-6, the basic compound used was 25 percent by mass ammonia water, and the amounts of aqueous ammonia and distilled water were changed respectively to 4.4 g and 495.6 g. The properties of the polyester resin aqueous dispersion were as follows:

    Solid content concentration: 30 percent by mass
    Organic solvent content: 0.07 percent by mass
    Volume-average particle diameter: 148 nm

Then, 40 g of the resin aqueous dispersion E-1 was used as the polyester resin (A) aqueous dispersion and 60 g of the resin aqueous dispersion E-6 as the polyester resin (B) aqueous dispersion, and the mixture was stirred at room temperature approximately for 5 minutes, to give a polyester resin aqueous dispersion E-17.

<Comparative Example 1>

Various properties of the polyester resin aqueous dispersion E-1 prepared in Example 1 were evaluated as it was used alone.

<Comparative Example 2>

Various properties of the polyester resin aqueous dispersion E-2 prepared in Example 3 were evaluated as it was used alone.

<Comparative Example 3>

Various properties of the polyester resin aqueous dispersion E-3 prepared in Example 5 were evaluated as it was used alone.

<Comparative Example 4>

Various properties of the polyester resin aqueous dispersion E-4 prepared in Example 1 were evaluated as it was used alone.

<Comparative Example 5>

Various properties of the polyester resin aqueous dispersion E-5 prepared in Example 6 were evaluated as it was used alone.

<Comparative Example 6>

Various properties of the polyester resin aqueous dispersion E-6 prepared in Example 7 were evaluated as it was used alone.

<Comparative Example 7>

(Preparation of polyester resin aqueous dispersion E-7)

300 g of polyester resin P-7, 180 g of isopropanol, 17 g of triethylamine, and 503 g of distilled water were placed in a stirrer equipped with a jacketed sealable 2-liter glass container (T.K. Robomix, manufactured by Tokushu Kika Kogyo Co., Ltd.) and agitated with its agitating-blade (Homodisper) at rotational velocity of 7,000 rpm. The mixture was agitated at an internal temperature kept to 73 to 75˚C for 30 minutes by heating with hot water circulating in the jacket. The mixture was then cooled to room temperature (approximately 25˚C) while cold water was supplied into the jacket and stirred at lower rotational velocity of 5,000 rpm, to give a polyester resin aqueous dispersion having an organic solvent content of more than 3 percent by mass. The dispersion was milky white and homogeneous.
Then, 500 g of the polyester resin aqueous dispersion thus obtained and 115 g of distilled water were placed in a 1-L round-bottomed flask; a mechanical stirrer and a Liebig condenser were connected to the flask, and the flask was heated in an oil bath, allowing vaporization of the aqueous medium under atmospheric pressure. Heating was terminated after approximately 153 g of the aqueous medium was distilled, and the mixture was allowed to cool to room temperature. After cooling, the liquid in the flask was filtered through a 600-mesh (twill dutch weave) stainless steel filter, and the solid content concentration of the filtrate was found to be 32.5 percent by mass. Distilled water was added to the filtrate for adjustment of the solid content while the mixture was stirred. The properties of the polyester resin aqueous dispersion E-7 were as follows:

        Solid content concentration: 30 percent by mass
        Organic solvent content: 0.3 percent by mass
        Volume-average particle diameter: 50 nm

Various properties of the polyester resin aqueous dispersion E-7 were evaluated as it was used alone.

<Comparative Example 8>

(Preparation of polyester resin aqueous dispersion E-8)

[Dissolution step]

400 g of polyester resin P-8 and 600 g of MEK were placed in a 2-L polyethylene container and stirred with a stirrer (MAZELA 1000, manufactured by Tokyo Rikakikai Co., Ltd) while the container was heated with hot water at approximately 60˚C to dissolve the polyester resin in MEK completely, to give a polyester resin solution having solid content concentration of 40 percent by mass.

[Phase-inversion emulsification step]

Then, 500 g of the polyester resin solution was placed in a jacketed glass container (capacity: 2L); and the mixture was stirred with a stirrer (MAZELA 1000, manufactured by Tokyo Rikakikai Co., Ltd.) at rotational velocity of 600 rpm, while the internal temperature of the system was kept at 13˚C with cold water. Then, 16 g of triethylamine was added thereto as a basic compound while the mixture was stirred, and then, 484 g of distilled water at 13˚C was added additionally at rate of 100 g/min. During addition of all distilled water, the internal temperature of the system was kept at 15˚C or lower. After addition of distilled water, the mixture was stirred for 30 minutes, to give an aqueous dispersion having solid content concentration of 20 percent by mass.

[Solvent-removing step]

Then, 800 g of the polyester resin aqueous dispersion obtained was placed in a round-bottomed flask; a mechanical stirrer and a Liebig condenser were connected thereto; and the aqueous medium was vaporized in an amount of approximately 284 g while the flask was heated in an oil bath under atmospheric pressure. After cooling, the liquid in the flask was filtered through a 600-mesh (twill dutch weave) stainless steel filter, and the solid content concentration of the filtrate was found to be 31.0 percent by mass. Distilled water was added to the filtrate for adjustment of the solid content while the mixture was stirred. The properties of the polyester resin aqueous dispersion E-8 were as follows:

    Solid content concentration: 30 percent by mass
    Organic solvent content: 0.1 percent by mass
    Volume-average particle diameter: 60 nm

Various properties of the polyester resin aqueous dispersion E-8 prepared in Example 3 were evaluated as it was used alone.

<Comparative Example 9>

(Preparation of polyester resin aqueous dispersion E-9)

300 g of polyester resin P-9, 180 g of isopropanol, 10 g of triethylamine, and 510 g of distilled water were placed in a stirrer equipped with a jacketed sealable 2-liter glass container (T.K. Robomix, manufactured by Tokushu Kika Kogyo Co., Ltd.) and agitated with its agitating-blade (Homodisper) at rotational velocity of 7,000 rpm. Then, the mixture was agitated for 60 minutes at an internal temperature kept to 73 to 75˚C by heating with hot water circulating in the jacket. Then, the mixture was cooled to room temperature (approximately 25˚C) while cold water was supplied into the jacket, and the mixture was stirred at lower rotational velocity of 5,000 rpm, to give an polyester resin aqueous dispersion having an organic solvent content of more than 3 percent by mass. The dispersion was milky white and homogeneous.

Then, 500 g of the polyester resin aqueous dispersion thus obtained and 115 g of distilled water were placed in a 1-L round-bottomed flask; a mechanical stirrer and a Liebig condenser were connected to the flask; and the flask was heated in an oil bath, allowing vaporization of the aqueous medium under atmospheric pressure. Heating was terminated after approximately 153 g of the aqueous medium was distilled, and the mixture was allowed to cool to room temperature. After cooling, the liquid in the flask was filtered through a 600-mesh (twill dutch weave) stainless steel filter, and the solid content concentration of the filtrate was found to be 32.5 percent by mass. Distilled water was added to the filtrate for adjustment of the solid content while the mixture was stirred. The properties of the polyester resin aqueous dispersion E-9 were as follows:

    Solid content concentration: 30 percent by mass
    Organic solvent content: 0.3 percent by mass
    Volume-average particle diameter: 150 nm

Various properties of the polyester resin aqueous dispersion E-9 were evaluated as it was used alone.

<Comparative Example 10>

(Preparation of polyester resin aqueous dispersion E-10)

[Dissolution step]

400 g of polyester resin P-10 and 600 g of MEK were placed in a 2-L polyethylene container and stirred with a stirrer (MAZELA 1000, manufactured by Tokyo Rikakikai Co., Ltd) while the container was heated with hot water at approximately 60˚C to dissolve the polyester resin in MEK completely, to give a polyester resin solution having solid content concentration of 40 percent by mass.

[Phase-inversion emulsification step]

Subsequently, 500 g of the polyester resin solution was placed in a glass container with jacket (capacity: 2L); and the mixture was stirred with a stirrer (MAZELA 1000, manufactured by Tokyo Rikakikai Co. Ltd.) at rotational velocity of 600 rpm, while the internal temperature of the system was kept at 13˚C with cold water. Then, 6 g of triethylamine was added thereto as a basic compound while the mixture was stirred, and 494 g of distilled water at 13˚C was added thereto additionally at rate of 100 g/min. During addition of all distilled water, the internal temperature of the system was kept at 15˚C or lower. After addition of distilled water, the mixture was stirred for 30 minutes, to give an aqueous dispersion having solid content concentration of 20 percent by mass.

[Solvent-removing step]

Subsequently, 800 g of the polyester resin aqueous dispersion obtained was placed in a round-bottomed flask; a mechanical stirrer and a Liebig condenser were connected thereto; and the aqueous medium was vaporized in an amount of approximately 284 g while the flask was heated in an oil bath under atmospheric pressure. After cooling, the liquid in the flask was filtered through a 600-mesh (twill dutch weave) stainless steel filter, and the solid content concentration of the filtrate was found to be 31.0 percent by mass. Distilled water was added to the filtrate for adjustment of the solid content while the mixture was stirred. The properties of the polyester resin aqueous dispersion E-10 were as follows:

Solid content concentration: 30 percent by mass
Organic solvent content: 0.1 percent by mass
Volume-average particle diameter: 144 nm

Various properties of the polyester resin aqueous dispersion E-10 were evaluated as it was used alone.

<Comparative Example 11>

A polyester resin aqueous dispersion E-18 was prepared in a similar manner to Example 1, except that 90 g of the polyester resin aqueous dispersion E-1 was used as the polyester resin (A) aqueous dispersion and 10 g of the resin aqueous dispersion E-4 used as the polyester resin (B) aqueous dispersion was added to E-1.

<Comparative Example 12>

A polyester resin aqueous dispersion E-19 was prepared in a similar manner to Example 1, except that 15 g of the polyester resin aqueous dispersion E-1 was used as the polyester resin (A) aqueous dispersion and added to 85 g of the resin aqueous dispersion E-4 used as the polyester resin (B) aqueous dispersion.

<Comparative Example 13>

A polyester resin aqueous dispersion E-20 was prepared in a similar manner to Example 1, except that 40 g of the polyester resin aqueous dispersion E-1 was used as the polyester resin (A) aqueous dispersion and added to 60 g of the resin aqueous dispersion E-8 used as the polyester resin (B) aqueous dispersion.

<Comparative Example 14>

A polyester resin aqueous dispersion E-21 was prepared in a similar manner to Example 1, except that 40 g of the polyester resin aqueous dispersion E-7 was used as the polyester resin (A) aqueous dispersion and added to 60 g of the resin aqueous dispersion E-4 used as the polyester resin (B) aqueous dispersion.

<Comparative Example 15>

A polyester resin aqueous dispersion E-18 was prepared in a similar manner to Example 1, except that 70 g of the polyester resin aqueous dispersion E-9 was used as the polyester resin (A) aqueous dispersion and 30 g of the resin aqueous dispersion E-4 used as the polyester resin (B) aqueous dispersion was added to E-9.

<Comparative Example 16>

A polyester resin aqueous dispersion E-19 was prepared in a similar manner to Example 1, except that 30 g of the polyester resin aqueous dispersion E-1 was used as the polyester resin (A) aqueous dispersion and added to 70 g of the resin aqueous dispersion E-10 used as the polyester resin (B) aqueous dispersion.

Results of various evaluations of the polyester resin aqueous dispersions obtained in Examples 1 to 7 and Comparative Examples 1 to 16 are summarized in Table 2.

[Table 2]

| | Polyester resin aqueous dispersion. | Polyester resin (A)/(B) (ratio by mass) | Low-temperature filming property | | Blocking resistance | Low-temperature heat-sealing property (N/25mm) |
|---|---|---|---|---|---|---|
| | | | Appearance | Adhesiveness | | |
| Example 1 | E-11 | P-1/P-4=70/30 | ○ | ○ | ○ | 0.09 |
| Example 2 | E-12 | P-1/P-4=30/70 | ○ | ○ | ○ | 0.21 |
| Example 3 | E-13 | P-2/P-4=50/50 | ○ | ○ | ○ | 0.11 |
| Example 4 | E-14 | P-2/P-4=30/70 | ○ | ○ | ○ | 0.17 |
| Example 5 | E-15 | P-3/P-4=50/50 | ○ | ○ | ○ | 0.12 |
| Example 6 | E-16 | P-1/P-5=40/60 | ○ | ○ | ○ | 0.12 |
| Example 7 | E-17 | P-1/P-6=40/60 | ○ | ○ | ○ | 0.16 |
| Comparative Example 1 | E-1 | P-1=100 | ○ | ○ | ○ | 0.02 |
| Comparative Example 2 | E-2 | P-2=100 | × | ○ | ○ | 0.02 |
| Comparative Example 3 | E-3 | P-3=100 | × | ○ | ○ | 0.03 |
| Comparative Example 4 | E-4 | P-4=100 | ○ | ○ | × | 0.60 |
| Comparative Example 5 | E-5 | P-5=100 | ○ | ○ | × | 0.37 |
| Comparative Example 6 | E-6 | P-6=100 | ○ | ○ | × | 0.44 |
| Comparative Example 7 | E-7 | P-7=100 | ○ | × | ○ | 0.01 |

(continued)

| | Polyester resin aqueous dispersion. | Polyester resin (A)/(B) (ratio by mass) | Low-temperature filming property | | Blocking resistance | Low-temperature heat-sealing property (N/ 25mm) |
|---|---|---|---|---|---|---|
| | | | Appearance | Adhesiveness | | |
| Comparative Example 8 | E-8 | P-8=100 | ○ | ○ | × | 0.11 |
| Comparative Example 9 | E-9 | P-9=100 | ○ | ○ | × | 0.05 |
| Comparative Example 10 | E-10 | P-10=100 | ○ | ○ | × | 0.14 |
| Comparative Example 11 | E-18 | P-1/P-4=90/10 | ○ | ○ | ○ | 0.02 |
| Comparative Example 12 | E-19 | P-1/P-4=15/85 | ○ | ○ | × | 0.25 |
| Comparative Example 13 | E-20 | P-I/P-8=40/60 | ○ | ○ | ○ | 0.04 |
| Comparative Example 14 | E-21 | P-7/P-4=40/60 | ○ | × | ○ | 0.02 |
| Comparative Example 15 | E-22 | P-9/P-4=70/30 | ○ | ○ | × | 0.10 |
| Comparative Example 16 | E-23 | P-1/P-10=30/70 | ○ | ○ | ○ | 0.05 |

As apparent from the results in Examples and Comparative Examples of Table 2, the polyester resin aqueous dispersions according to the present invention are superior in low-temperature filming property, and the films obtained from the aqueous dispersions are superior in blocking resistance and low-temperature heat-sealing property.

In contrast, the films obtained in Comparative Examples had the following disadvantages:

The films obtained in Comparative Examples 1 to 3 and 11, which contained a greater amount of polyester resin (A), were inferior in low-temperature filming property and low-temperature heat-sealing property.

The films obtained in Comparative Examples 4 to 6, 8, and 12, which contained a greater amount of polyester resin (B), were superior in low-temperature heat-sealing property, but inferior in blocking resistance.

The film obtained in Comparative Example 7, which contained a polyester resin having a number-average molecular weight lower than the polyester resin (A) and did not contain polyester resin (B), was inferior in low-temperature filming property (adhesive properties) and low-temperature heat-sealing property.

The films obtained in Comparative Examples 9 and 10, which contained polyester resins having a glass transition temperature not corresponding to those of the polyester resins (A) and (B) according to the present invention, were inferior in blocking resistance when used alone.

The film obtained in Comparative Example 13, which contained a polyester resin (B) having a number-average molecular weight lower than the favorable range, was inferior in low-temperature heat-sealing property.

The film obtained in Comparative Example 14, which contained a polyester resin (A) having a number-average molecular weight lower than the favorable range, was inferior in low-temperature filming property (adhesive properties) and low-temperature heat-sealing property.

The film obtained in Comparative Example 15, which contained a polyester resin (A) having a glass transition temperature lower than the favorable range, was inferior in blocking resistance.

The film obtained in Comparative Example 16, which contained a polyester resin (B) having a glass transition temperature over the favorable range, was inferior in low-temperature heat-sealing property.

Industrial Applicability

The polyester resin aqueous dispersion according to the present invention gives a resin film superior in low-temperature filming property, blocking resistance and heat-sealing property, and thus, is favorably used as a binder component of heat sealing agents, and the product carrying the film is favorable in packaging bag application, and the present invention is very valuable industrially.

**Claims**

1. A polyester resin aqueous dispersion, comprising:

   a polyester resin (A) having a number-average molecular weight of 5,000 or more, a glass transition temperature of 50 ˚C or higher and an acid value of 4 to 40 mg-KOH/g, and
   a polyester resin (B) having a number-average molecular weight of 9,000 or more, a glass transition temperature of 30 ˚C or lower and an acid value of 2 to 10 mg-KOH/g at a rate (A)/(B) in the range of 80/20 to 20/80 (by mass) wherein the polyester resins (A) and (B) respectively are comprised of one or more polybasic acid components selected from the group consisting of terephthalic acid, isophthalic acid, phthalic acid, phthalic anhydride, naphthalenedicarboxylic acid, biphenyldicarboxylic acid, oxalic acid, succinic acid, succinic anhydride, adipic acid, azelaic acid, sebacic acid, dodecanedionic acid, hydrogenated dimer acid, fumaric acid, maleic acid, maleic anhydride, itaconic acid, itaconic anhydride, citraconic acid, citraconic anhydride, dimer acid, 1,4-cyclohexanedicarboxylic acid, 1,3-cyclohexanedicarboxylic acid, 1,2-cyclohexanedicarboxylic acid, 2,5-norbornene dicarboxylic acid, 2,5-norbornenedicarboxylic anhydride, tetrahydrophthalic acid, and tetrahydrophthalic anhydride, and
   an alcohol component comprising ethylene glycol and neopentylglycol at a total content of 50 mol% or more, wherein the number-average molecular weight is determined by GPC analysis by using LC-10ADvp liquid-supplying unit and ultraviolet-visible spectrophotometer SPD-6AV manufactured by Shimadzu Corporation under conditions of detection wavelength: 254 nm, solvent: tetrahydrofuran, and polystyrene conversion, wherein the glass transition temperature is determined by analyzing 10 mg of a polyester resin sample in a differential scanning calorimetry apparatus by using DSC7 manufactured by PerkinElmer Japan Co., Ltd. at a heating speed of 10 ˚C/minute, determining two inflection-point temperatures due to glass transition in the temperature rise curve obtained, and obtaining the intermediate value thereof, and wherein the acid value is determined by dissolving 0.5 g of a polyester resin sample in 50 ml of water/dioxane = 1/9 (by volume), determining the amount of KOH consumed in neutralization by titration of the solution with KOH in the presence of an indicator cresol red, and converting the amount to a value per 1 g of the polyester resin.

2. The polyester resin aqueous dispersion according to Claim 1, wherein at least one of the polyester resins (A) and (B) respectively comprises one of more trifunctional or higher acids selected from the group consiting of trimellitic acid, pyromellitic acid, benzophenonetetracarboxylic acid, trimellitic anhydride, pyromellitic anhydride, benzophenonetetracarboxylic anhydride, trimesic acid, ethylene glycol bis(anhydrotrimellitate), glycerol tri(anhydrotrimellitate), and 1,2,3,4-butanetetracarboxylic acid, and the content of the trifunctional or higher acid is 0 to 10 mol% of the total polybasic acid components.

3. The polyester resin aqueous dispersion according to Claim 1, wherein at least one of the polyester resins (A) and (B) respectively comprises one of more monocarboxylic acids selected from the group consisting of lauric acid, myristic acid, palmitic acid, stearic acid, oleic acid, linoleic acid, and linolenic acid, and ester-forming derivatives thereof; benzoic acid, p-tert-butylbenzoic acid, cyclohexanoic acid and 4-hydroxyphenylstearic acid.

4. The polyester resin aqueous dispersion according to Claim 1, wherein at least one of the polyester resins (A) and (B) respectively comprises one of more hydroxycarboxylic acids selected from the group consisting of ε-caprolactone, lactic acid, β-hydroxybutyric acid and p-hydroxbenzoic acid, and ester-forming derivatives thereof.

5. The polyester resin aqueous dispersion according to any one of Claims 1 to 4, wherein the polyester resin (A) and/or the polyester resin (B) have carboxyl groups at the terminals and a part or all of the carboxyl groups are neutralized with a basic compound.

6. The polyester resin aqueous dispersion according to any one of Claims 1 to 5, wherein the content of the organic solvent is 3 percent by mass or less.

7. A film, prepared by removing the aqueous medium from the polyester resin aqueous dispersion according to any one of Claims 1 to 6.

8. A packaging bag, prepared by thermally fusing the film according to Claim 7.

**Patentansprüche**

1. Wässrige Polyesterharzdispersion, umfassend:

ein Polyesterharz (A) mit einem zahlengemittelten Molekulargewicht von 5.000 oder mehr, einer Glasübergangstemperatur von 50˚C oder höher und einem Säurewert von 4 bis 40 mg-KOH/g und

ein Polyesterharz (B) mit einem zahlengemittelten Molekulargewicht von 9.000 oder mehr, einer Glasübergangstemperatur von 30˚C oder niedriger und einem Säurewert von 2 bis 10 mg-KOH/g in einem Verhältnis (A)/(B) im Bereich von 80/20 bis 20/80 (bezogen auf die Masse),

worin die Polyesterharze (A) bzw. (B) eine oder mehrere mehrbasige Säurekomponenten umfassen, ausgewählt aus der Gruppe bestehend aus Terephthalsäure, Isophthalsäure, Phthalsäure, Phthalsäureanhydrid, Naphthalindicarbonsäure, Biphenyldicarbonsäure, Oxalsäure, Bernsteinsäure, Bernsteinsäureanhydrid, Adipinsäure, Azelainsäure, Sebacinsäure, Dodecandisäure, hydrierte Dimersäure, Furmarsäure, Maleinsäure, Maleinsäureanhydrid, Itaconsäure, Itaconsäureanhydrid, Citraconsäure, Citraconsäureanhydrid, Dimersäure, 1,4-Cyclohexandicarbonsäure, 1,3-Cyclohexandicarbonsäure, 1,2-Cyclohexandicarbonsäure, 2,5-Norbornendicarbonsäure, 2,5-Norbornendicarbonsäureanhydrid, Tetrahydrophthalsäure und Tetrahydrophthalsäureanhydrid sowie

eine Alkoholkomponente, die Ethylenglycol und Neopentylglycol in einem Gesamtgehalt von 50 Mol% oder mehr umfasst,

worin das zahlengemittelte Molekulargewicht durch GPC-Analyse unter Verwendung einer LC-10ADvp-Flüssigkeitsversorgungseinheit und einem UV/Vis-Spektrophotometer SPCD6AV, hergestellt von Shimadzu Corporation, unter den Bedingungen einer Detektionswellenlänge von 254 nm, Lösungsmittel: Tetrahydrofuran und Polystyrol-Konversion bestimmt wird,

worin die Glasübergangstemperatur durch Analyse von 10 mg einer Polyesterharzprobe in einem dynamischen Differenzkalometrie-Gerät unter Verwendung von DSC7, hergestellt von PerkinElmer Japan Co., Ltd., bei einer Aufwärmgeschwindigkeit von 10˚C/Minute bestimmt wird, durch Bestimmung zweier Wendepunkttemperaturen aufgrund des Glasübergangs in der Temperaturanstiegskurve und Erhalt des Mittelwerts davon

und worin der Säurewert durch Auflösen von 0,5 g einer Polyesterharzprobe in 50 ml Wasser/Dioxan = 1/9 (auf Basis des Volumens), Ermitteln der in der Neutralisation verbrauchten Menge KOH durch Titration der Lösung mit KOH in Gegenwart des Indikators Kresolrot und Umrechnen der Menge auf einen Wert pro 1 g des Polyesterharzes ermittelt wird.

2. Wässrige Polyesterharzdispersion gemäß Anspruch 1, worin mindestens eines der Polyesterharze (A) bzw. (B) eine oder mehrere trifunktionelle oder höhere Säuren umfasst, die aus der Gruppe bestehend aus Trimellitsäure, Pyromellitsäure, Benzophenontetracarbonsäure, Trimellitsäureanhydrid, Pyromellitsäureanhydrid, Benzophenontetracarbonsäureanhydrid, Trimesinsäure, Ethylenglycol-bis(anhydrotrimellitat), Glycerin-tri(anhydrotrimellitat) und 1,2,3,4-Butantetracarbonsäure, und der Gehalt der trifunktionellen oder höheren Säure 0 bis 10 Mol% der gesamten mehrbasigen Säurekomponenten ist.

3. Wässrige Polyesterharzdispersion gemäß Anspruch 1, worin mindestens eines der Polyesterharze (A) bzw. (B) eine oder mehrere Monocarbonsäuren ausgewählt aus der Gruppe bestehend aus Laurinsäure, Myristinsäure, Palmitinsäure, Stearinsäure, Ölsäure, Linolsäure und Linolensäure und Ester-bildende Derivate davon; Benzoesäure, p-tert-Butylbenzoesäure, Cyclohexansäure und 4-Hydroxyphenylstearinsäure umfasst.

4. Wässrige Polyesterharzdispersion gemäß Anspruch 1, worin mindestens eines der Polyesterharze (A) bzw. (B) eine oder mehrere Hydroxycarbonsäuren ausgewählt aus der Gruppe bestehend aus ε-Caprolacton, Milchsäure, β-Hydroxybuttersäure und p-Hydroxybenzoesäure und Esterbildenden Derivaten davon umfasst.

5. Wässrige Polyesterharzdispersion gemäß mindestens einem der Ansprüche 1 bis 4, worin das Polyesterharz (A) und/oder Polyesterharz (B) Carboxylgruppen an den Enden hat und ein Teil oder alle der Carboxylgruppen mit einer basischen Verbindung neutralisiert sind.

6. Wässrige Polyesterharzdispersion gemäß mindestens einem der Ansprüche 1 bis 5, worin der Gehalt an organischem Lösungsmittel 3 Massen% oder weniger ist.

**7.** Film, hergestellt durch Entfernen des wässrigen Mediums aus der wässrigen Polyesterharzdispersion gemäß mindestens einem der Ansprüche 1 bis 6.

**8.** Verpackungsbeutel, hergestellt durch thermisches Verschmelzen des Films gemäß Anspruch 7.

**Revendications**

**1.** Dispersion aqueuse de résine de polyester, comprenant :

une résine de polyester (A) ayant un poids moléculaire moyen en nombre de 5 000 ou plus, une température de transition vitreuse de 50 ˚C ou plus et un indice d'acide de 4 à 40 mg-KOH/g, et
une résine de polyester (B) ayant un poids moléculaire moyen en nombre de 9 000 ou plus, une température de transition vitreuse de 30 ˚C ou moins et un indice d'acide de 2 à 10 mg-KOH/g, à un rapport (A)/(B) dans la gamme de 80/20 à 20/80 (en masse),
dans laquelle les résines de polyester (A) et (B) respectivement sont composées d'un ou plusieurs constituants acides polybasiques choisis dans le groupe constitué par l'acide téréphtalique, l'acide isophtalique, l'acide phtalique, l'anhydride phtalique, l'acide naphtalènedicarboxylique, l'acide biphényldicarboxylique, l'acide oxalique, l'acide succinique, l'anhydride succinique, l'acide adipique, l'acide azélaïque, l'acide sébacique, l'acide dodécanedionique, un acide dimère hydrogéné, l'acide fumarique, l'acide maléique, l'anhydride maléique, l'acide itaconique, l'anhydride itaconique, l'acide citraconique, l'anhydride citraconique, un acide dimère, l'acide 1,4-cyclohexanedicarboxylique, l'acide 1,3-cyclohexanedicarboxylique, l'acide 1,2-cyclohexanedicarboxylique, l'acide 2,5-norbornène dicarboxylique, l'anhydride 2,5-norbornènedicarboxylique, l'acide tétrahydrophtalique et l'anhydride tétrahydrophtalique, et
un constituant alcool comprenant de l'éthylèneglycol et du néopentylglycol en une teneur totale de 50 % en moles ou plus,
dans laquelle le poids moléculaire moyen en nombre est déterminé par analyse GPC en utilisant un dispositif d'alimentation liquide LC-10ADvp et un spectrophotomètre ultraviolet-visible SPD-6AV fabriqué par Shimadzu Corporation dans des conditions de longueur d'onde de détection : 254 nm, solvant : tétrahydrofuranne, et conversion du polystyrène,
dans laquelle la température de transition vitreuse est déterminée en analysant 10 mg d'un échantillon de résine de polystyrène dans un appareil de calorimétrie différentielle à balayage en utilisant un DSC7 fabriqué par PerkinElmer Japan Co., Ltd. à une vitesse de chauffage de 10 ˚C/minute, en déterminant deux températures de point d'inflexion sous l'effet de la transition vitreuse dans la courbe d'élévation de température obtenue, et en obtenant la valeur intermédiaire de celles-ci, et
dans laquelle l'indice d'acide est déterminé en dissolvant 0,5 g d'un échantillon de résine de polyester dans 50 ml d'eau/dioxane = 1/9 (en volume), en déterminant la quantité de KOH consommée lors de la neutralisation par titrage de la solution avec du KOH en présence d'un indicateur rouge de crésol, et en convertissant la quantité à une valeur par 1 g de la résine de polyester.

**2.** Dispersion aqueuse de résine de polyester selon la revendication 1, dans laquelle au moins l'une des résines de polyester (A) et (B) comprend respectivement un ou plusieurs acides trifonctionnels ou plus choisis dans le groupe constitué par l'acide trimellitique, l'acide pyromellitique, l'acide benzophénonetétracarboxylique, l'anhydride trimellitique, l'anhydride pyromellitique, l'anhydride benzophénonetétracarboxylique, l'acide trimésique, le bis(anhydrotrimellitate) d'éthylèneglycol, le tri(anhydrotrimellitate) de glycérol et l'acide 1,2,3,4-butanetétracarboxylique, et la teneur en acide trifonctionnel ou plus est de 0 à 10 % en moles des constituants acides polybasiques totaux.

**3.** Dispersion aqueuse de résine de polyester selon la revendication 1, dans laquelle au moins l'une des résines de polyester (A) et (B) comprend respectivement un ou plusieurs acides monocarboxyliques choisis dans le groupe constitué par l'acide laurique, l'acide myristique, l'acide palmitique, l'acide stéarique, l'acide oléique, l'acide linoléique et l'acide linolénique, et les dérivés formateurs d'esters de ceux-ci ; l'acide benzoïque, l'acide p-tert-butylbenzoïque, l'acide cyclohexanoïque et l'acide 4-hydroxyphénylstéarique.

**4.** Dispersion aqueuse de résine de polyester selon la revendication 1, dans laquelle au moins l'une des résines de polyester (A) et (B) comprend respectivement un ou plusieurs acides hydroxycarboxyliques choisis dans le groupe constitué par la ε-caprolactone, l'acide lactique, l'acide β-hydroxybutyrique et l'acide p-hydroxybenzoïque, et les dérivés formateurs d'esters de ceux-ci.

**5.** Dispersion aqueuse de résine de polyester selon l'une quelconque des revendications 1 à 4, dans laquelle la résine de polyester (A) et/ou la résine de polyester (B) ont des groupes carboxyles aux terminaisons et une partie ou la totalité des groupes carboxyles sont neutralisés avec un composé basique.

**6.** Dispersion aqueuse de résine de polyester selon l'une quelconque des revendications 1 à 5, dans laquelle la teneur en solvant organique est de 3 pour cent en masse ou moins.

**7.** Film, préparé en éliminant le milieu aqueux à partir de la dispersion aqueuse de résine de polyester selon l'une quelconque des revendications 1 à 6.

**8.** Sac de conditionnement, préparé en fusionnant thermiquement le film selon la revendication 7.

**EP 1 923 428 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1457525 A
- JP 9296100 A
- JP 2000026709 A
- JP 2000313793 A
- JP 2002173582 A
- WO 2004037924 A